# EUROPEAN PATENT APPLICATION

(11) **EP 4 450 258 A1**
(43) Date of publication of application: **23.10.2024**
(21) Application number: 24171137.3
(22) Date of filing: 18.04.2024
(51) Int. Cl.: B29C 64/118, B29C 64/393, B33Y 50/02, B33Y 10/00, B33Y 30/00

(54) **ADDITIVE MANUFACTURING METHOD**

(30) Priority: 21.04.2023 IT 202300007986
(71) Applicant: C.M.S. S.p.A., 24019 Zogno (BG) (IT)
(72) Inventor: VIMERCATI, Claudio Giuseppe, 24010 Costa Serina (BG) (IT); BARERA, Giacomo, 20010 Bernate Ticino (MI) (IT)
(74) Representative: Luppi Intellectual Property S.r.l.

(57) **Abstract**

An additive manufacturing method is disclosed for printing a desired object starting from a computerized 3D model using an extrusion head for the deposition in contiguous layers (4, 5) of a strand of molten extrudable material intended to solidify. The method involves generating a deposition time interval (T1, T2) within which to deposit the strand along a desired path, for each layer to be deposited (4), based on a group of target strand parameters (F), a group of model parameters (G) and a group of material parameters (M). The deposition time interval is defined by a lower limit time (T1) determined on the basis of a minimum level of solidification of a previous layer (5), and by an upper limit time (T2) determined on the basis of a maximum level of solidification of the previous layer (5), the previous layer (5) being contiguous to said layer to be deposited (4). Based on the deposition time interval (T1, T2) it is also planned to generate a current displacement speed (PS) and a current rotation speed (SR) for the deposition of the layer (4). An additive manufacturing apparatus (1) with calculation means (9) for generating the deposition time interval for each layer is disclosed.

## Description

### Background of the invention

The invention concerns an additive manufacturing method for printing an object, in particular an additive manufacturing method that uses an extrusion head for the deposition in contiguous layers of a strand of extrudable material intended to be solidified, in particular a thermoplastic material (pure or reinforced with carbon fibers, glass, etc.) in granulate form.

Specifically but not exclusively, the invention can be applied to an extrusion head of the type comprising a screw extruder (Screw Extrusion Additive Manufacturing).

Specifically, but not exclusively, the invention can be applied in the field of the so-called Large Format Additive Manufacturing (LFAM).

The prior art includes additive manufacturing methods that use software, so-called slicing software, suitable for converting a 3D object model into instructions for an additive manufacturing machine (in particular, a 3D printer that delivers a filament of extrudable material, the so-called "strand") by generating a desired path, or print path.

A slicing software typically divides the 3D model into contiguous (e.g. overlapping) layers and then associates with each layer a desired path that the extrusion head will follow to deposit the extruded strand to form the layer.

In the prior art it is envisaged to set, as an operating parameter, in the additive manufacturing machine a target deposition time within which the extrusion head deposits the strand to form a layer. The target deposition time is determined based on the experience of an additive manufacturing machine operator, based on the desired object to be printed and based on the material to be extruded.

The prior art has some disadvantages.

First of all, in fact, if the deposition of an extruded strand to form a first layer occurs in a relatively short target time, a second layer following the first can cause the failure of the first layer, since the latter is still relatively fluid and is, therefore, incapable of stably supporting the weight of the second layer. The finished object created by depositing the strand according to relatively short target times results in production waste as it will have dimensional deviations from the reference computerized 3D model (shape errors) given by the unwanted deformation of the layers.

Secondly, if the deposition of the extruded strand to form the first layer occurs in a relatively long target time, the second layer may adhere poorly to the first layer because the latter is now solid. Even the finished object created by depositing the filament over a relatively long time is a production waste, in this case since it will be fragile and flaky due to poor adhesion between the layers.

In addition, the fact that the target times are determined based on experience makes the additive manufacturing method inflexible when the object to be printed varies.

### Summary of the invention

An aim of the invention is to provide an alternative solution to the problem of determining a target time in which a layer of extruded material is deposited to form a desired obj ect.

A further aim is to provide a method and an additive manufacturing apparatus capable of reducing production waste.

An advantage is to make available a constructionally simple and economical additive manufacturing apparatus.

These aims and advantages, and others, are achieved by an additive manufacturing method and apparatus according to one or more of the claims reported below.

An additive manufacturing method is disclosed for printing a desired object starting from a computerized 3D model using an extrusion head for the deposition in contiguous layers of a strand of molten extrudable material intended to solidify. The method involves generating a deposition time window within which to deposit the strand along a desired path, based on a set of target strand parameters, a set of template parameters, and a set of material parameters. The deposition time interval is defined by a lower limit time determined on the basis of a minimum solidification level of a previous layer, and by an upper limit time determined on the basis of a maximum solidification level of the previous layer. Based on the deposition time interval, it is also planned to generate an actual displacement speed and an actual rotation speed for the layer deposition.

An additive manufacturing apparatus with computational means for generating the deposition time interval for each layer is disclosed.

### Brief description of the drawings

The invention can be better understood and implemented with reference to the attached drawings which illustrate non-limiting examples of implementation, in which:
Figure 1 shows a first simplified diagram that implements the additive manufacturing method according to the invention;
Figure 2 shows a first part of an extended diagram that implements the additive manufacturing method according to the invention;
Figure 3 shows a second part of the extended diagram of Figure 2;
Figure 4 shows a third part of the extended diagram of Figures 2 and 3;

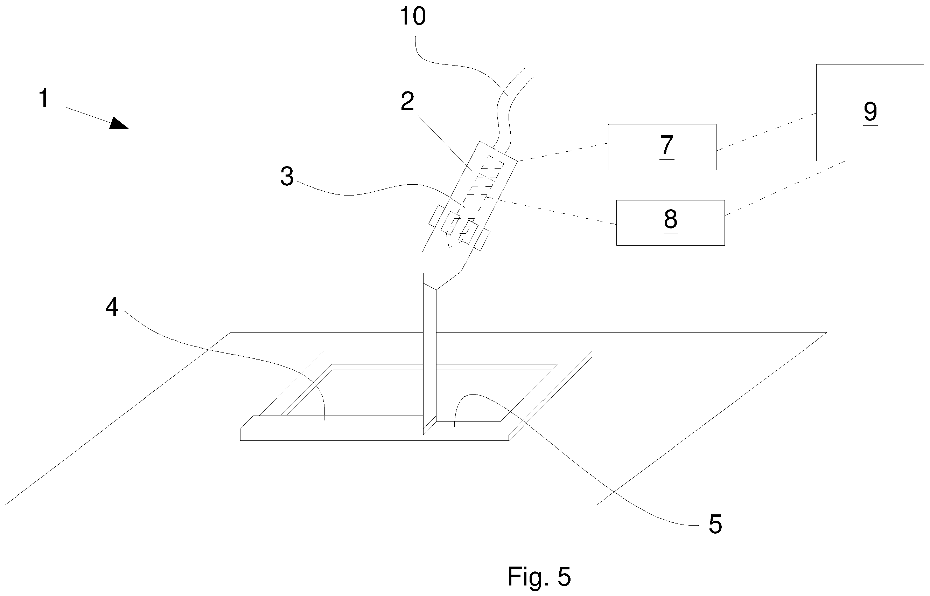

Figure 5 is a schematic representation of an additive manufacturing apparatus that implements the method according to the invention.

### Detailed description

With reference to the aforementioned figures, an additive production method is disclosed below for printing a desired object starting from a computerized 3D model using an extrusion head 2 for the deposition in contiguous layers 4, 5 of a strand of material extrudable.

As mentioned, the extrudable material may, in particular, be a material intended to solidify, in particular a thermoplastic material. The material may be pure thermoplastic or reinforced (filled) with carbon fibers, glass fibers, etc. By way of non-exclusive example, the thermoplastic material may be chosen from a group that includes acrylonitrile butadiene styrene (ABS), aliphatic polyamides (PA), polylactic acid (PLA), polycarbonate (PC), polyetherimide (PEI), polysulfones (PESU), polyethylene terephthalate (PET), glycol modified polyethylene terephthalate (PETG) and polypropylene (PP). The material may be in granulated form.

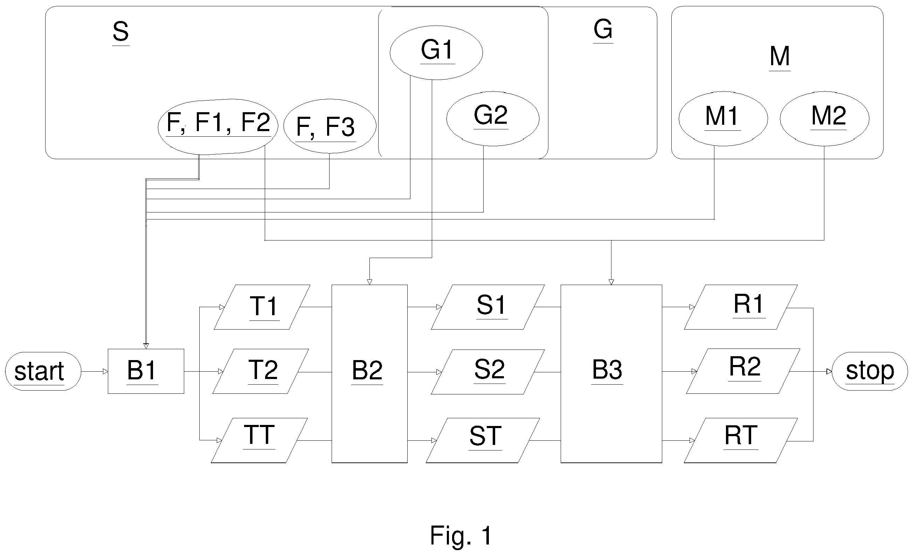

For each layer 4 to be deposited, the additive manufacturing method includes a step of storing a group of material parameters M (Figures 1, 2 and 3) containing information about physical properties of the material to be extruded.

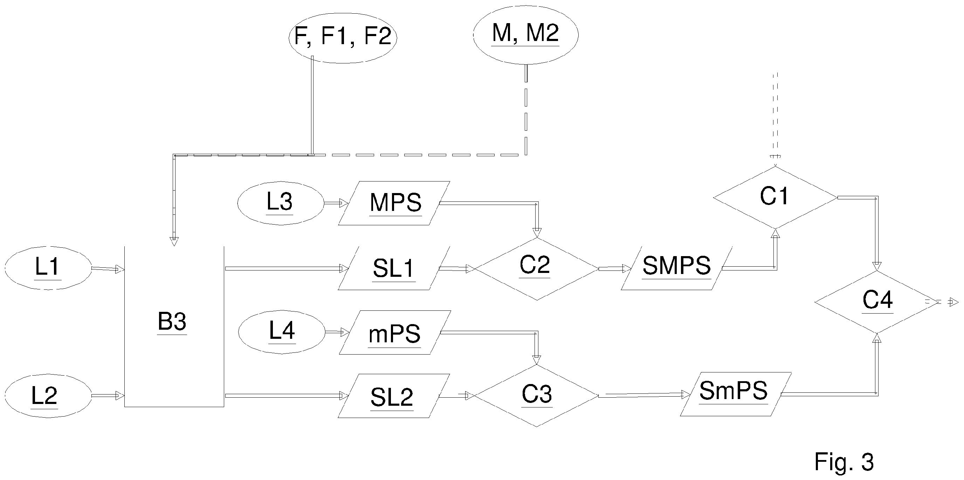

The material parameter group M may comprise a cooling parameter group M1 (Figures 1 and 3). The cooling parameter group M1 contains a series of values indicative of a material cooling rate (when the latter is melted for extrusion). By way of example, but not exclusively, the cooling parameters M1 may be traced back to a heat transfer coefficient of the material.

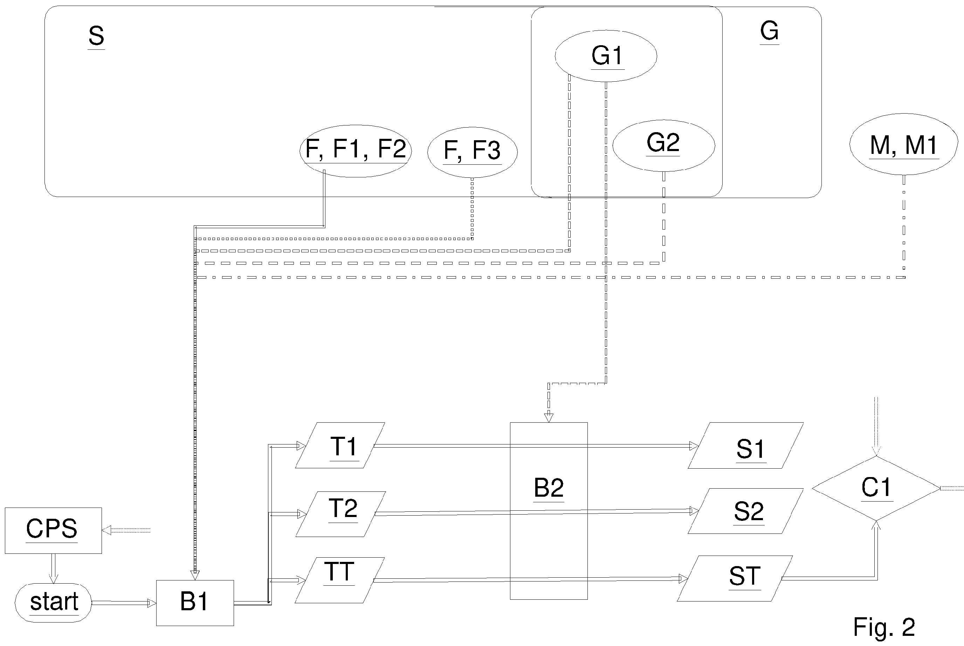

The group of material parameters M may include a group of flow rate parameters M2 (Figures 1 and 2). The flow rate parameter group M2 contains a series of values that correlate the rotation speed of a supply screw 3 - provided in the extrusion head 2 - to the flow rate delivered by the extrusion head 2.

It is possible to perform the step of storing the material parameter group M via mass storage means, such as a hard disk or the like.

The additive manufacturing method comprises, for each layer 4, a step of providing as input to a slicing software S (Figures 1 and 2) a group of target strand parameters F. The group of target strand parameters F may contain dimensional information of the strand or cord to be extruded once it is printed (height and width) and the number of strand or cords placed side by side (or number of passes of the extrusion head 2, for each layer 4) to print the single layer.

In particular, the target strand parameter group F may include a target strand height F 1, a target strand width F2. As mentioned, the target strand parameter group F may further comprise a number of strands F3 placed side by side to form a wall portion of the desired object.

The additive manufacturing method comprises, for each layer 4, a step of generating via the slicing software S a group of model parameters G. The group of model parameters G comprises a desired path along which to deposit the strand. In other words, the desired path defines the trajectory of the deposition head 2 for each layer 4.

The group of model parameters G may comprise a parameter associated with the length G1 of the desired path in the layer to be deposited 4. The parameter associated with the length G1 may comprise a length of the desired path. The group of model parameters G may comprise a two-dimensional geometry G2 of the layer to be deposited 4, such as a section of the layer to be deposited 4. The group of model parameters G may be determined based on a geometry of the computerized 3D model and by slicing parameters, which will be described below.

The strand parameter group F and the model parameter group G may be slicing parameters provided as output of the slicing software S, in particular based on the 3D computer model of the desired object, or parameters arbitrarily chosen by an operator.

The slicing parameters may further include, but are not limited to, a number and geometry of internal or external strengthening ribs, a number and geometry of lightening cavities, a number and geometry of lightening or ventilation windows, the slicing direction (0/45/90°), the type of infill, a percentage of infill, an offset between layers, an overlap between adjacent layers.

The additive manufacturing method further comprises, for each layer 4, a step of generating a deposition time interval T1, T2 (Figures 1 and 2) within which to deposit the strand of extruded material along the desired path.

The step of generating the deposition time interval T1, T2 is performed based on the target strand parameter group F, the material parameter group M and the model parameter group G.

In other words, the deposition time interval T1, T2 is calculated on the basis of a thermodynamic model of the layer to be deposited 4.

The deposition time interval T1, T2 is defined by a lower limit time T1 determined on the basis of a minimum level of solidification of a previous layer 5, contiguous to the layer to be deposited 4, and by an upper limit time T2 determined based on a maximum level of solidification of the previous layer 5.

The lower limit time T1 is the minimum deposition time for which a layer (not shown) that is subsequent to the layer to be deposited 4 can cause a failure of the layer to be deposited 4, since the latter is still relatively fluid and is, therefore, unable to stably support the weight of the next layer.

The upper limit time T2 is the maximum deposition time for which the subsequent layer may not adhere (or adhere poorly) to the layer to be deposited 4 because the latter is now solid.

In other words, the degree of adhesion between the layer to be deposited 4 with the previous (or below) layer 5 is conditioned by a deposition temperature of the previous layer 5 at the time of deposition of the new layer 4. If the temperature of the receiving layer, i.e. the previous layer 5, exceeds a defined upper limit of deposition temperature, the reduced viscosity of the material prevents the correct support of the layer 4 being deposed, leading to failures or instability in the desired object. If the temperature of the previous layer 5 does not reach a defined lower deposition temperature limit, the limited diffusivity at the interface between the two layers does not allow a sufficient physical junction between the two layers 4, 5 and the consequent achievement of adequate physical and mechanical properties. The lower limits, upper limits and optimum value of the deposition temperature, which define an adhesion window, can be established experimentally and can vary from material to material.

The deposition time interval T1, T2 may include a target deposition time TT (Figures 1 and 2) within the deposition time interval T1, T2 between the lower limit time T1 and the upper limit time T2.

The deposition time interval T1, T2 and the target deposition time TT may be calculated for each individual layer. Additionally or alternatively, the deposition time T1, T2 and the target deposition time TT may be calculated on a group of layers (e.g. having similar shape).

The additive manufacturing method may provide for each layer 4, a step of calculating a first set of operating parameters ST, S1, S2 for the extrusion head 2. The first set of operating parameters ST, S1, S2 is calculated based on the deposition time interval T1, T2 and the desired path.

The first set of operating parameters ST, S1, S2 comprises, in particular, a set of displacement speed values (or printing speed values) applicable to the extrusion head 2 along the desired path.

The first set of operating parameters ST, S1, S2 may be translated into drive commands for displacement means 7 configured to move the extrusion head 2 along the desired path. In the context of the invention, the expressions "displacement speed" and "printing speed" refer to a movement of the extrusion head 2 in a workspace (or on a worktable) to deposit the layer 4.

The first set of operating parameters ST, S1, S2 may respectively comprise a first displacement speed S1 determined on the basis of the lower limit time T1 of layer deposition, a second displacement speed S2 determined on the basis of the upper limit time T2 of layer deposition. The first set of operating parameters ST, S1, S2 may further comprise a target displacement speed ST determined based on the target layer deposition time TT. The set of displacement speed values may be calculated based on the parameter associated with the length G1 of the desired path in each layer 4.

The additive manufacturing method may also provide, for each layer, a generation step, based on the first set of operating parameters ST, S1, S2, the group of strand parameters F and the group of material parameters M, a second set of operating parameters RT, R1, R2 for extrusion head 2.

The second set of operating parameters RT, R1, R2 may include a set of flow rate values of molten material to be delivered by the extrusion head 2.

The second set of operating parameters RT, R1, R2 may be translated into drive commands for feeding and dispensing means 8, 10 configured to deliver a flow rate of strand extruded from the extrusion head 2.

The set of flow rate values may be defined by a set of angular speeds, or set of rotational speeds, applicable to the supply screw 3 provided in the extrusion head 2. The set of flow rate values may be calculated based on the flow parameter group M1.

In the context of the invention the expressions "angular speed(s)" or "rotational speed" are associated with a rotation of the supply screw 3.

The second set of operating parameters RT, R1, R2 may respectively comprise a first flow rate R1 determined on the basis of the first displacement speed S1, a second flow rate R2 determined on the basis of the second displacement speed S2. The second set of operating parameters RT, R1, R2 may further include a target range RT determined based on the target displacement speed ST.

Referring to the diagram of Figures 2, 3 and 4, for each layer 4, the following can be predicted as input data: the target width F2 of the strand and the target height F1 of the strand (or layer), the number F3 of strands placed side by side to form a wall of layer 4, the parameter associated with the length G1 of the strand to be deposited for each layer 4, and the group of cooling parameters M1.

Based on this data, it is expected to generate time equations B1 which result in the layer deposition time interval T1, T2 which, as mentioned, includes the target deposition time TT.

On the basis of the deposition time interval T1, T2 and the parameter associated with the path length G1 it is expected to determine a displacement speed equation B2 which links the target deposition time TT, the lower limit time T1 and the upper limit time T2 of the time interval T1, T2 to a set of displacement speed values, i.e. respectively a target displacement speed ST, a first displacement speed S 1 and a second displacement speed S2.

Furthermore, based on the target width F2, the target height F1 of the strand, the flow rate parameter group M2 and a maximum rotation speed L1 achievable by the extrusion screw and a minimum rotation speed L2 achievable by the extrusion screw, it is expected to determine flow and rotation equations B3. The maximum rotation speed L1 of the extrusion screw and the minimum rotation speed L2 of the extrusion screw are operating limit operating parameters imposed by the extrusion screw 3.

There is a step C2 of comparing the displacement speed at the maximum rotation speed SL1 with an upper limit displacement speed MPS and choosing the lowest value, this value determines a system maximum displacement speed SMPS (Figure 3).

There is also a step C3 of comparing displacement speed at the minimum rotation speed SL2 (from the flow and rotation equations B3) with a lower limit displacement speed mPS and choosing the highest value, this value determines a system minimum speed displacement SmPS.

The upper limit displacement speed MPS and the lower limit displacement speed mPS are limiting operating parameters of the extrusion head 2.

At this point, there is a step C1 of selecting the lower value between the maximum system displacement speed SMPS and the target displacement speed ST (previously calculated with the displacement speed equation B2).

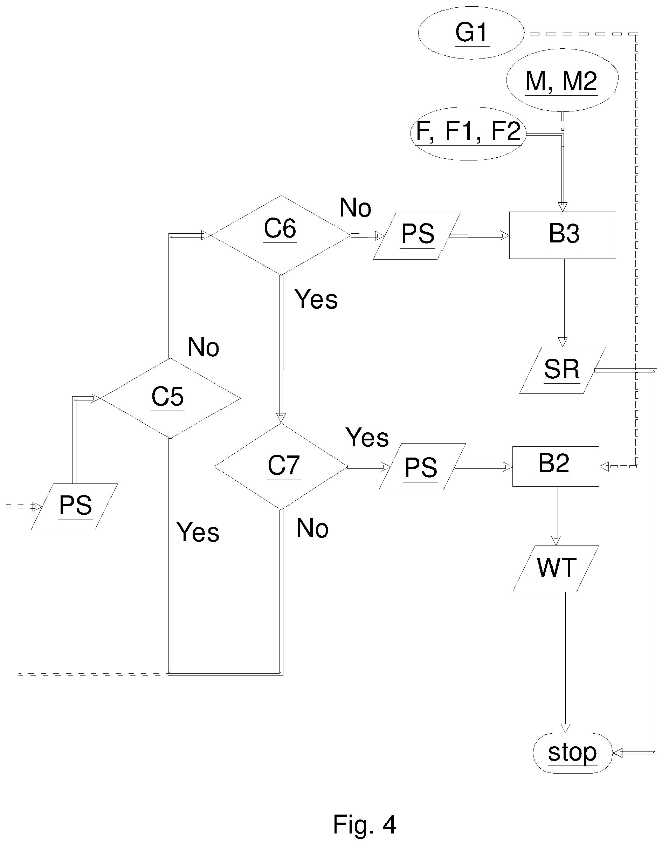

Subsequently, a step C4 is provided to select the highest value between the minimum system displacement speed SmPS and the lowest value selected in the previous step C1 to select (which can be the maximum system displacement speed SMPS or the target displacement speed ST), the result of this last comparison determines a current displacement speed PS (or current printing speed, Figure 4).

Subsequently, a step C5 is provided to evaluate whether the current displacement speed PS is less or greater than the second displacement speed S2 (previously calculated from the displacement speed equation B2). In other words, a step C5 is provided to compare the current displacement speed PS with the displacement speed to which the upper deposition time limit T2 corresponds.

If the current displacement speed PS is less than the second displacement speed S2 then a step CPS is envisaged to vary the slicing parameters and subsequently a start step ("Start", Figure 2) and a cycle related to printing of the layer.

If the current displacement speed PS is greater than the second displacement speed S2 then a step C6 is provided to evaluate whether the current displacement speed PS is greater than the first displacement speed S 1. In other words, a step C6 is provided to compare the current displacement speed PS with the displacement speed to which the lower deposition time limit T1 corresponds.

At this point, if the current displacement speed PS is greater than the first displacement speed S1, a step C7 is provided to choose to generate a waiting time to reach the lower limit deposition time T1; if, however, the current displacement speed PS is less than the first displacement speed S1, the current displacement speed PS is maintained and through the flow rate and rotation equations B3 (based on the group of flow rate parameters M1, the target width F2 and the target height F1 of the strand) a current rotation speed SR is obtained and the cycle for molding layer 4 is finished ("Stop", Figure 4).

If in step C7 of choosing to generate a waiting time WT to reach the lower deposition time limit T1 it is decided to generate a waiting time WT, a current displacement speed PS is determined and via the displacement speed equations B2, based on the parameter associated with the length G1 of the desired path, a value of the waiting time WT is generated; at this point the cycle for molding the layer is finished ("Stop", Figure 4).

If in the phase of choosing to generate a waiting time WT to reach the lower limit deposition time T1 it is decided not to generate a waiting time WT, the step CPS of varying the slicing parameters is envisaged and subsequently the step to start ("Start", Figure 2) a cycle relating to the printing of the layer again.

In other words, after calculating the set of displacement speeds S 1, S2, ST based on the deposition time interval T1, T2, and the target deposition time TT, it is expected, in the steps C1 and C2, to select the lower value between: the upper limit displacement speed MPS defined by the maximum displacement speed achievable by the extrusion head 2, the displacement speed at the maximum rotation speed SL1 calculated based on the maximum rotation speed achievable by the supply screw 3, and the target displacement speed ST calculated based on the target deposition time TT.

In steps C3 and C4 it is envisaged to select the greater value between the lower limit displacement speed mPS defined by the minimum displacement speed reachable by the extrusion head 2, the displacement speed at the minimum rotation speed SL2 calculated based on the speed minimum rotation reachable by the supply screw, and the value resulting from the choice of steps C1 and C2, the result is the current displacement speed PS.

Subsequently, it is verified that the current displacement speed PS allows the layer to be deposited in a time included in the deposition time interval T1, T2.

In other words, it is verified that the layer can be deposited within the deposition window defined by the lower and upper temperature limits.

If so, the current rotation speed SR is calculated on the basis of the current displacement speed PS (via the flow rate and rotation equations B3).

If not, and if the current displacement speed PS is too low, i.e. it is lower than the speed determined based on the upper deposition time T2, it is necessary to change the slicing parameters, in particular at least one of the strand parameters F1, F2, F3 of target strand parameter group F.

If not, and if the current displacement speed PS is too high, i.e. it is higher than the speed determined based on the lower deposition time T1, a waiting time WT may be generated or the slicing parameters may be changed.

The disclosed additive manufacturing method may be implemented in an additive manufacturing apparatus 1 to print a desired object starting from a computerized 3D model comprising an extrusion head 2 for deposition in contiguous layers of a strand of extrudable material.

The extrusion head 2 may comprise strand feeding and dispensing means 8, 10 such as a supply screw 3 and a strand dispensing nozzle.

The extrusion head 2 may include heaters to soften and/or melt the material to be extruded.

The additive manufacturing apparatus 1 comprises mass storage means configured, in particular, to store, for each layer 4, a group of material parameters M containing information on physical properties of the extrudable material.

The additive manufacturing apparatus 1 includes calculation means 9 comprising a slicing software S and configured, in particular, to receive as input, for each layer 4, a group of target strand parameters F and generate at least one group of G model parameters including a desired path along which to deposit the strand.

The calculation means 9 is further configured, in particular, to generate, for each layer 4, based on the group of target strand parameters F, the group of model parameters G and the group of material parameters M, a deposition time interval T1, T2 within which to deposit the strand along the desired path.

The additive manufacturing apparatus 1 may further comprise displacement means 7 configured, in particular, to move the extrusion head 2 at a controlled displacement speed, determined by the calculating means 9.

The displacement means 7 may comprise a linear electric actuator comprising an electric motor.

Additionally or alternatively, the displacement means 7 may comprise a linear fluid dynamic actuator comprising in particular a fluid driven cylinder.

The additive production apparatus 1 may further comprise feeding and dispensing means 8, 10 configured, in particular, to deliver a controlled flow rate, determined by the calculating means 9, from the extrusion head 2. The feeding and dispensing means 8, 10 may include the supply screw 3.

The additive manufacturing method may be implemented in the slicing software S.

Alternatively, the additive manufacturing method may be implemented in a software that is distinct from the slicing software S and interfaceable with the latter.

The disclosed method allows automating the generation of process parameters, such as printing speed and rotation, thus simplifying the programming and definition of the printing path.

The method also considers the process limits of the machine, in particular of the extrusion head 2, such as the upper limit displacement speed MPS and the lower limit displacement speed mPS, and of the supply screw 3, such as the speed maximum rotation speed L1 of the extrusion screw and the minimum rotation speed L2 of the extrusion screw.

The generated parameters, in particular the current displacement speed PS to be applied to the extrusion head 2 and the current rotation speed SR to be applied to a supply screw 3 may be used to maximize the productivity of the production apparatus while minimizing its production times.

The disclosed production method and apparatus may work at both variable and constant speed and flow rate.

The disclosed production method and apparatus may be used both in automatic mode and as control of parameters set/modified manually by the user.

From what has been disclosed above it is evident that the additive manufacturing method and apparatus achieve all the intended purposes.

What has been said and shown in the attached drawings has been provided as an illustration of the innovative characteristics of the additive manufacturing method and apparatus. Variations and/or additions to what is disclosed above and illustrated in the attached drawings are possible.

## Claims

1. Additive manufacturing method for printing a desired object starting from a 3D computer model by means of an extrusion head (2) for depositing a strand of extrudable material in contiguous layers (4, 5); the method comprising, for each layer (4) to be deposited, the following steps:
storing a group of material parameters (M) containing information on physical properties of said extrudable material;
providing a group of target strand parameters (F) as input to a slicing software (S), and generating by means of said slicing software (S) a group of model parameters (G) comprising a desired path along which to deposit said strand;
based on said group of target strand parameters (F), said group of model parameters (G), and said group of material parameters (M), generating a deposition time range (T1, T2) within which to deposit said strand along said desired path;
wherein said extrudable material includes a molten material intended to solidify, and wherein said deposition time range (T1, T2) is defined by a lower limit time (T1) determined on the basis of a minimum solidification level of a preceding layer (5), said preceding layer (5) being contiguous to said layer (4) to be deposited, and by an upper limit time (T2) determined on the basis of a maximum solidification level of said preceding layer (5), and
based on said deposition time range (T1, T2), generating an actual displacement speed (PS) to be applied to said extrusion head (2) for depositing said layer (4) and an actual rotation speed (SR) to be applied to a supply screw (3) provided in said extrusion head (2) to dispense said material.

2. Method according to claim 1, wherein said deposition time range (T1, T2) includes a target deposition time (TT) comprised within said deposition time range (T1, T2) between said lower limit time (T1) and said upper limit time (T2).

3. Method according to claim 1 or 2, wherein verifying that said actual displacement speed (PS) allows to deposit said layer (4) in a deposition time comprised within said deposition time range (T1, T2) is provided.

4. Method according to any one of the preceding claims, wherein generating a wait time (WT) for said extrusion head (2) is provided, if said actual displacement speed (PS) is higher than a first displacement speed (S 1) determined on the basis of said lower limit time (T1).

5. Method according to any one of the preceding claims, wherein varying at least one target strand parameter (F1, F2, F3) of said group of target strand parameters (F) as input to said slicing software (S) is provided, if said actual displacement speed (PS) is lower than a second displacement speed (S2) determined on the basis of said upper limit time (T2).

6. Method according to any one of the preceding claims, wherein it is provided a step of selecting (C1, C2) the smaller value between: an upper limit displacement speed (MPS) defined by a maximum displacement speed achievable by said extrusion head (2), a displacement speed at maximum rotation speed (SL1) calculated on the basis of a maximum rotation speed achievable by said supply screw (3), and a target displacement speed (ST) calculated on the basis of said target deposition time (TT).

7. Method according to claim 6, wherein it is provided a step of calculating (C3, C4) said actual displacement speed (PS) to be applied to said extrusion head (2) by selecting the greater value between: a lower limit displacement speed (mPS) defined by a minimum displacement speed achievable by said extrusion head (2), a displacement speed at minimum rotation speed (SL2) calculated on the basis of a minimum rotation speed achievable by said supply screw (3) and the value resulting from said step of selecting (C1, C2).

8. Method according to any one of the preceding claims, wherein, based on said deposition time range (T1, T2) and said desired path, calculating a first set of operative parameters (ST, S 1, S2) for said extrusion head (2) is provided, said first set of operative parameters (ST, S 1, S2) comprising a displacement speed values set applicable to said extrusion head (2) along said desired path.

9. Method according to claim 8, wherein, based on said first set of operative parameters (ST, S 1, S2), said group of target strand parameters (F), and said group of material parameters (M), generating a second set of operative parameters (RT, R1, R2) for said extrusion head (2) is provided, said second set of operative parameters (RT, R1, R2) comprising a flow rate values set of molten material to be delivered from said extrusion head (2).

10. Method according to claim 9, wherein said set flow rate values set is defined by an angular speed values set applicable to said supply screw (3) provided in said extrusion head (2).

11. Method according to claim 10, wherein said group of material parameters (M) comprises a group of flow rate parameters (M2) that correlates said angular speed values set of said supply screw (3) to said flow rate values set of molten material to be delivered from said extrusion head (2).

12. Method according to any one of the preceding claims, wherein said group of model parameters (G) comprises a length associated parameter (G1) of said desired path in said layer (4) to be deposited and/or a bidimensional geometry (G2) of said layer to be deposited.

13. Method according to claim 12 when appended to any one of claims 8 to 11, wherein said displacement speed values set is calculated on the basis of said length associated parameter (G1) of said desired path in said layer (4) to be deposited.

14. Method according to any one of the preceding claims, wherein said group of strand parameter (F) comprises a target height (F1) of said strand and/or a target width (F2) of said strand and/or a number of strands (F3) side by side to form a portion of a wall of said desired object.

15. Method according to any one of the preceding claims, wherein said group of material parameters (M) comprises a group of cooling parameters (M1) which are indicative of a cooling speed (M1) of said material.

16. Additive manufacturing apparatus for printing a desired object starting from a 3D computer model, comprising:
an extrusion head (2) for depositing a strand of extrudable material in contiguous layers (4, 5);
storing means configured to store, for each layer (4) to be deposited, a group of material parameters (M) containing information on physical properties of said extrudable material;
calculating means (9) comprising a slicing software (S) and configured to receive as input, for each layer (4) to be deposited, a group of target strand parameters (F) and to generate a desired path along which to deposit said strand;
wherein said calculating means (9) is further configured to generate, for each layer (4) to be deposited, based on said group of target strand parameters (F), said group of model parameters (G), and said group of material parameters (M), a deposition time range (T1, T2) within which to deposit said strand along said desired path, and wherein said deposition time range (T1, T2) is defined by a lower limit time (T1) determined on the basis of a minimum solidification level of a preceding layer (5), said preceding layer (5) being contiguous to said layer (4) to be deposited, and by an upper limit time (T2) determined on the basis of a maximum solidification level of said preceding layer (5), and
wherein said calculating means (9) is further configured to generate, for each layer (4) to be deposited, an actual displacement speed (PS) to be applied to said extrusion head (2) for depositing said layer (4) and an actual rotation speed (SR) to be applied to a supply screw (3) provided in said extrusion head (2) to dispense said material.
